# EUROPEAN PATENT APPLICATION

(11) **EP 1 579 821 A1**
(43) Date of publication of application: **28.09.2005**
(21) Application number: 05006113.4
(22) Date of filing: 21.03.2005
(51) Int. Cl.: A61C 13/20, B23K 11/28, B23K 11/00, B23K 11/04

(54) **Apparatus for intraorally electrowelding titanium and alloys thereof**

(30) Priority: 22.03.2004 IT MI20040549
(71) Applicant: Lorenzon, Giorgio, 10032 Brandizzo (Torino) (IT); Implamed S.r.l., 26100 Cremona (IT)
(72) Inventor: Lorenzon, Giorgio, 10032 Brandizzo (Torino) (IT); Ungari, Renato, 26100 Cremona (IT)
(74) Representative: Cicogna, Franco

(57) **Abstract**

The present invention relates to an apparatus for intraorally electrowelding titanium and alloys thereof, comprising a gripper body defining two electrodes, therebetween the elements to be welded are arranged.

The electrodes are coupled to a current electric source, for heating the material to be welded up to the melting point thereof.

Moreover, a delivery nozzle for delivering argon gas at the welding zone is also provided.

## Description

### BACKGROUND OF THE INVENTION

The present invention relates to an apparatus for intraorally electrowelding titanium and alloys thereof.

As is known, in intraorally electrowelding titanium and alloys thereof, which operation is performed by a syncrystallization method, it is necessary to apply a set pressure during the electrowelding operation proper.

In such an electrowelding method, a portion of the metal material affected by the welding can be subjected to a gauge loss, deriving from a degeneration of the surface layer because of the oxygen oxidating action.

This surface layer, in particular, is greatly affected through its thickness by the used current amount and it has been found that, in a case of a very high current, the surface oxidation may be such as to break away the welded elements, both immediately, and after a long time, because of a spoiling of the metallurgical properties of the titanium material.

### SUMMARY OF THE INVENTION

Thus, the aim of the present invention is to solve the above mentioned problem, by providing an apparatus for intraorally electrowelding titanium and alloys thereof, allowing to provide an accurate locating of the elements being electrowelded, while preventing possible reactions with the air oxygen.

Within the scope of the above mentioned aim, a main object of the present invention is to provide such an apparatus allowing to easily control all the different operating steps, while providing a possibility of storing specific values intended for each application or elements to be welded.

Another object of the present invention is to provide such an apparatus which, owing to its specifically designed constructional features, is very reliable and safe in operation.

Yet another object of the present invention is to provide an apparatus for intraorally electrowelding titanium and alloys thereof, which can be easily made and which, moreover, is very competitive from a mere economic standpoint.

According to one aspect of the present invention, the above mentioned aim and objects, as well as yet other objects, which will become more apparent hereinafter, are achieved by an apparatus for intraorally electrowelding titanium and alloys thereof, characterized in that said apparatus comprises a gripper body defining two electrodes therebetween elements to be electrowelded may be arranged, said electrodes being coupled to an electric current source to heat the material to be electrowelded up to a melting point thereof, a delivery nozzle for delivering argon gas at the electrowelding zone being moreover provided.

### BRIEF DESCRIPTION OF THE DRAWINGS

Further characteristics and advantages of the present invention will become more apparent hereinafter from the following detailed disclosure of a preferred, though not exclusive, embodiment of an apparatus for intraorally electrowelding titanium and alloys thereof, which is illustrated, by way of an indicative but not limitative example, in the accompanying drawings, where:

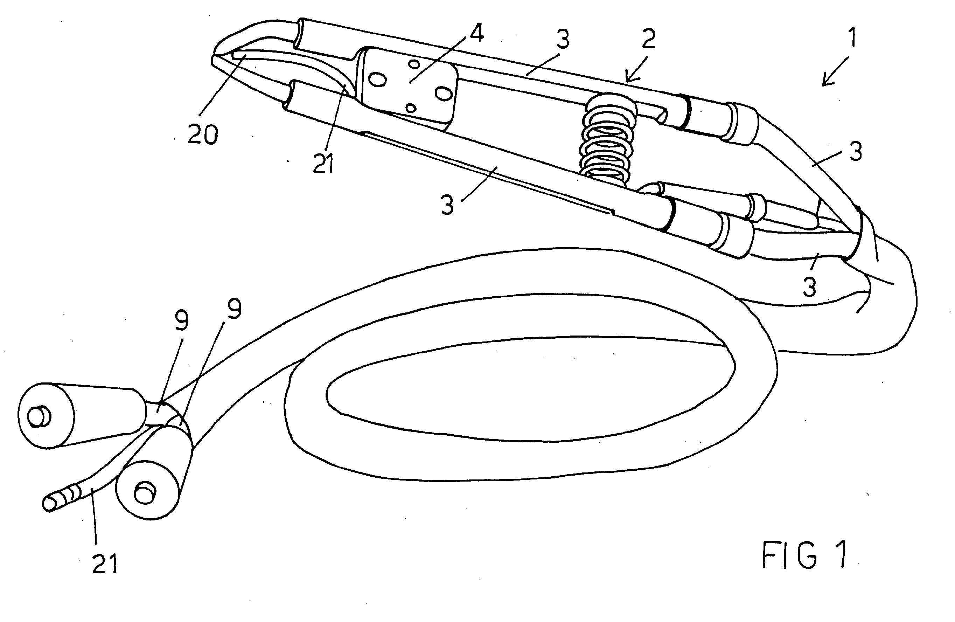

Figure 1 is a schematic perspective view illustrating the apparatus according to the invention;

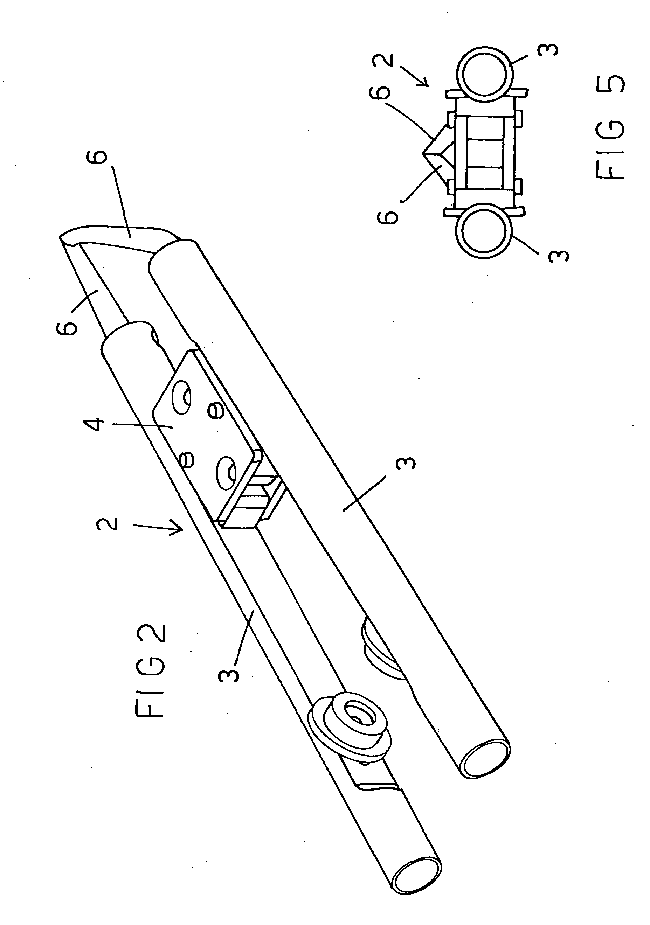

Figure 2 is a further perspective view including the gripper body included in the inventive apparatus;

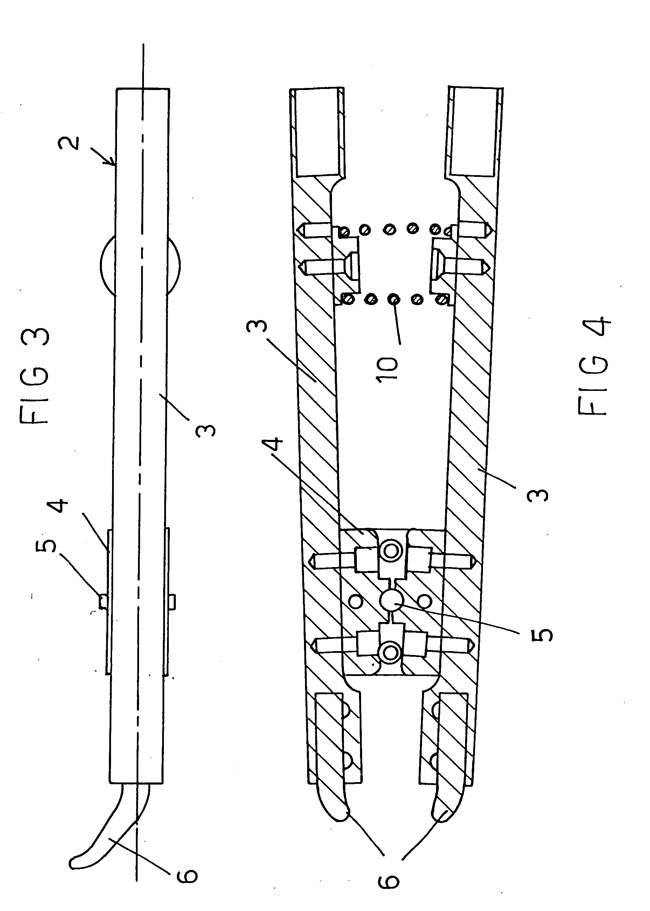

Figure 3 is an elevation side view illustrating the gripper body;
Figure 4 is a cross sectional view illustrating that same gripper body;

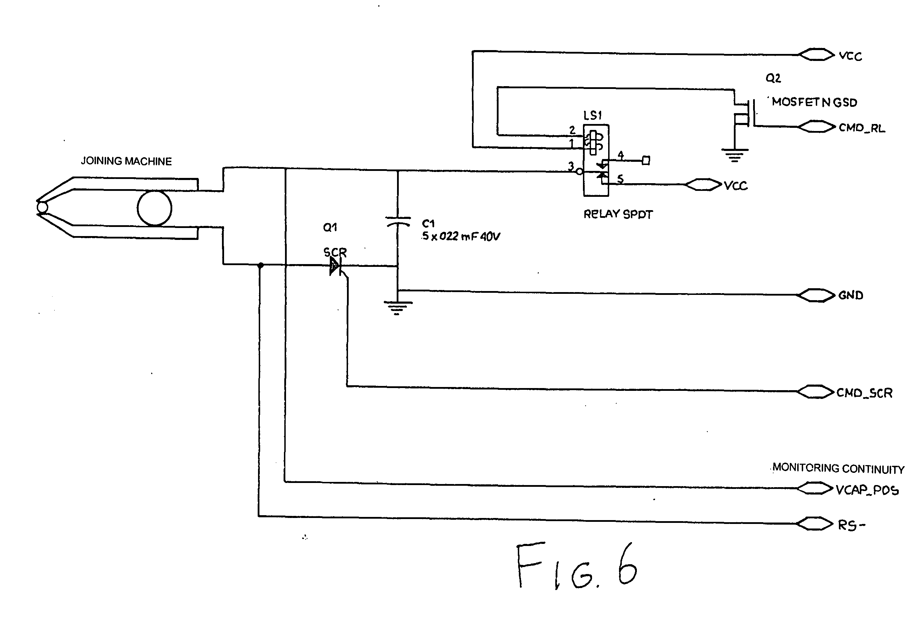

Figure 5 is an end view illustrating that same gripper body; and
Figure 6 illustrates the electronic circuit of the electrowelding apparatus according to the present invention, which, through two discrete controls, provide a proper operating efficiency.

### DESCRIPTION OF THE PREFERRED EMBODIMENTS

With reference to the number references of the above mentioned figures, the apparatus for intraorally electrowelding titanium and alloys thereof, according to the present invention, which has been generally indicated by the reference number 1, comprises a gripper body 2, which is coupled, through coupling cables 9, to a capacitor battery, which has not been specifically shown.

The gripper body 2 comprises mutually pivoted legs 3, which are not twined with one another, at a central block 4 defining the articulation pivot pin 5.

At the bottom end portion thereof, each leg is coupled to an electrode 6, which has a curved configuration, and which can be abutted against the electrode arranged on the adjoining leg.

At their opposite end portions, pushing resilient means are provided between said legs 3, said pushing resilient means comprising a spring 10 which holds said electrodes 6 resiliently pressed against one another, thereby allowing to provide the welding pressure as conventionally used during the electrowelding process.

At the electrode contact region a delivery nozzle 20 for delivering argon gas is provided, said delivery nozzle 20 being coupled, through a coupling duct 21, to a pressurized argon source, allowing to provide, at the electrowelding zone, an inert environment.

The subject apparatus allows to electroweld metal elements directly in the oral cavity of a patient.

More specifically, the electrowelding process is of an electric type without the addition of material in an inner gas atmosphere, since a set argon gas amount is delivered.

The two elements to be electrowelded are arranged between the two electrodes of the gripper.

Then, electric current from a capacitor battery, as preliminarily charged, is caused to pass through said electrodes.

In particular, said current, flowing through the contacting points of the two paths to be electrowelded, will heat the material up to its melting point, thereby providing an electrowelded joint.

The gas is delivered through the overall operating cycle and brought to the welding point through the duct 21, which is controlled by a low voltage control valve.

Thus, the provision of argon will prevent the material being molted from reacting, under the effect of temperature, with air oxygen, to produce oxidation and a spoiling of the material mechanical characteristics.

Inside the gripper body is provided a microcontroller, which controls the user interface through control keys, an encoder and a display.

Moreover, through programmable operations, it is possible to record a series of programs which can be customized for the different elements to be electrowelded, thereby limiting possible errors and the like.

In practice, the electrowelding cycle or operation comprises three different steps, including a starting step necessary for assuring that the atmosphere, near the electrowelding point, is devoid of any oxygen, before starting the welding step.

The starting step is followed by a proper electrowelding step, in which the capacitor accumulated energy is discharged according to an adjustable rate, through the electrodes.

An end step is moreover provided, in which the atmosphere is held free of oxygen, as far as the joint temperature has achieved such a level as to prevent any possible contact reaction of the air oxygen.

The apparatus would allow to define, for each program stored therein, three different values related to the start step, the proper electrowelding step and end electrowelding step.

Before each electrowelding cycle, the microprocessor will control that proper conditions are held for the electric circuit and welding point, so that the electric resistance of the overall circuit will be less than a preset value.

The mentioned circuit would be defined as a safety circuit, and allows, independently from the operator skillness, to assure the closure of the electric circuit on the elements to be electrowelded, to prevent alternating path patterns, the patient included.

Moreover, the apparatus further comprises an acoustic signalling device designed for signalling to the operator the start and end of the electrowelding cycle or operation.

The welding process is performed, in particular, by a welding current, generated by a capacitor of 1F, charged to a voltage proportional to the required power (Table 1) according to the relationship E = V² x C/2, where E represents the energy, V the capacitor charging voltage and C the capacitor capacity.

The current flowing through the two points of the pins to be welded, will heat the materials thereby causing them to be molten.

The welding proper is achieved, as stated, in a controlled environment which is controlled by supplying a noble gas (argon) to prevent any oxidation from occurring.

The electrowelding will depend on several parameters which mainly depends on the two elements to be electrowelded.

Thus, it is required to experimentally define the optimum welding parameters, and the optimum necessary power and related time.

To that end, the apparatus provides to use a 16-cycle tables, which will be hereinafter called "jobs", for adjusting the electrowelding parameters.

More specifically, a table which can be set by the user will allow to define the welding energy and power for each of the stored welding processes.

To obtain in a time as small as possible, the energy or power necessary for performing the welding process, the capacitor C is charged as the apparatus is turned on, and is recharged after each welding operation, and being held in a charged condition during a standby period.

A specifically designed monitoring circuit will monitor the continuity of the welding circuit.

If continuity is lacking, then the welding process cannot be performed, and a suitable acoustic device will signal this failure to the user.

The closure actuation of the SCR (during the welding operation) is provided by a double electronic circuit which, through two discrete controls, will assure the proper efficiency of the microcontroller.

The electrowelding cycle or process is carried out by the following steps, by using the parameters defined in the table for the intended job.
1. Pressing on the pedal
2. Actuating the gas
3. Disconnecting the capacitor charging circuit through the RL1 relay.
4. Monitoring the efficiency of the welding process by verifying the electric circuit continuity.
5. Generating the SCR closing command

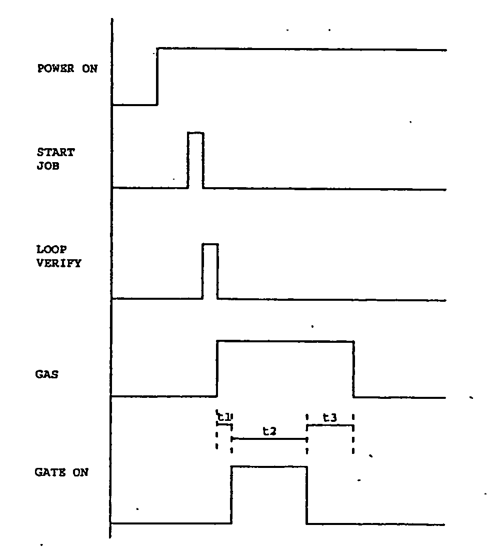

The job configuration table, the user interface and inlet and outlet controls or commands are managed by the microcontroller 89C66, which communicates with the user through a keyboard, an encoder and graphic display of a 64x128 dot type back illuminated by a LED.

From the above disclosure it should be apparent that the invention fully achieves the intended aim and objects.

In fact, the invention provides an apparatus for intraorally electrowelding titanium and alloys thereof, which is very efficient and reliable in operation and which, moreover, allows an optimum repeatability of the performed operations.

The invention, as disclosed, is susceptible to several modifications and variations, all of which will come within the inventive idea scope.

Moreover, all the constructional details can be replaced by other technically equivalent elements.

In practicing the invention, the used materials, provided that they are compatible to the intended use, and the contingent size and shapes, can be any, depending on requirements.

## Claims

1. An apparatus for intraorally electrowelding titanium and alloys thereof, **characterized in that** said apparatus comprises a gripper body defining two electrodes therebetween elements to be electrowelded may be arranged, said electrodes being coupled to an electric current source to heat the material to be electrowelded up to a melting point thereof, a delivery nozzle for delivery argon gas at the electrowelding zone being moreover provided.

2. An apparatus according to the preceding claim, **characterized in that** said current source comprises a capacitor battery.

3. An apparatus according to claim 1, **characterized in that** said argon gas delivery nozzle is coupled to an argon gas delivery duct controlled by low voltage electrovalves.

4. An apparatus according to claim 1, **characterized in that** said gripper body comprises a microcontroller designed for managing the user interface through keys, an encoder and a display.

5. An apparatus according to claim 1, **characterized in that** said apparatus comprises recording means for recording a series of programs which can be customized for different elements to be electrowelded.

6. An apparatus according to claim 1, **characterized in that** said apparatus is designed for performing an electrowelding cycle including a starting operating step in which argon gas is supplied to the welding zone, a welding step proper in which the energy accumulated in said capacitor battery is discharged and an end step, in an argon gas atmosphere, in which is achieved a thermal level adapted to prevent any possible contact reaction with the air oxygen from occurring.

7. An apparatus according to claim 6, **characterized in that** for each stored operating program, is possible to set different values for said three different welding steps.

8. An apparatus according to claim 6, **characterized in that**, before each welding cycle, the microprocessor verifies the current conditions of the electric circuit and welding point.

9. An apparatus according to claim 1, **characterized in that** the electric resistance of the overall circuit, at the welding zone, is less than a preset value.

10. An apparatus according to claim 1, **characterized in that** said apparatus further comprises an acoustic signalling device for signalling the start and end of the welding cycle.

11. An apparatus according to claim 1, **characterized in that** in said apparatus the welding process is carried out by using a current, generated by a 1 F capacitor charged to a voltage proportional to the required energy according to the relationship E = V² x C/2, where E is the energy, V is the capacitor charging voltage and C is the capacitor capacity.

12. An apparatus according to claim 1, **characterized in that** said apparatus is designed for performing 15 welding cycles, in which it is possible to adjust the welding parameters according to a table which can be set by the user to define the powers and times for each of the stored welding processes.

13. An apparatus according to claim 1, **characterized in that** said apparatus comprises a capacitor which is charged as the apparatus is turned on, and recharged after each welding operation and held in a charged condition during a standby period.

14. An apparatus according to claim 1, **characterized in that** said apparatus comprises an electronic circuit for controlling the continuity of the welding circuit and which, in a continuity lacking condition, does not allow the welding process to be performed, whereas a signaling acoustic element signals the failure to the user.

15. An apparatus according to claim 1, **characterized in that** said apparatus comprises a welding SCR the closure of which is provided by a double electronic circuit which, through two discrete controls, assures that the microcontroller is properly operating.

16. An apparatus according to claim 1, **characterized in that** in said apparatus the welding cycle is carried out by using parameters defined in a job table and by a pedal pressing step, a gas actuating step, a capacitor charging circuit disconnecting step, a welding process controlling step.

17. An apparatus according to claim 16, **characterized in that** said welding cycle or process is carried out as said SCR is closed.

18. An apparatus according to claim 16, **characterized in that** the user interface and inlet and outlet controls are controlled by a 89C66 microcontroller, communicating with the user through a keyboard, an encoder and a graphic display of a 64x128 dot type and back-illuminated by a LED.
